# FASCICULE DE BREVET EUROPEEN

(11) **EP 1 600 652 B1**
(45) Date de publication et mention de la délivrance du brevet: **25.03.2009**
(21) Numéro de dépôt: 05011088.1
(22) Date de dépôt: 23.05.2005
(51) Int. Cl.: F16D 65/097, F16D 55/00

(54) **Dispositif d'attenuation du bruit dans un frein a disque et frein a disque muni d'un tel dispositif**
Einrichtung zur Geräuschdämpfung an Scheibenbremsen und mit einer solchen Einrichtung ausgestattete Scheibenbremse.
Noise dampening device for disc brakes and disc brake using such a device.

(30) Priorité: 27.05.2004 FR 0405754
(43) Date de publication de la demande: 30.11.2005
(73) Titulaire: ROBERT BOSCH GMBH, 70442 Stuttgart (DE)
(72) Inventeur: Picot, Pascal, 77170 Brie Comte Robert (FR)
(74) Mandataire: Hurwic, Aleksander Wiktor

(56) Documents cités:
- US-A- 4 995 482
- US-A- 5 704 452

## Description

L'invention a pour objet un dispositif d'atténuation du bruit dans un frein à disque pour véhicule automobile. L'invention s'applique aux freins à disque munis d'un piston comportant une cavité interne, fermée à une première extrémité par une paroi transversale par rapport à un axe du piston, et ouverte à une autre extrémité. L'invention a plus précisément pour objet un dispositif d'atténuation du bruit apte à obturer une ouverture de la cavité d'un tel piston. L'invention a aussi pour objet un frein à disque pour véhicule automobile muni d'un dispositif d'atténuation du bruit de l'invention.

Un but de l'invention est de fournir un frein à disque permettant de réduire des bruits émis lors d'un freinage du véhicule. Un autre but de l'invention est de diminuer un coût de fabrication d'un frein à disque muni de moyens pour diminuer les bruits. Un but supplémentaire de l'invention est de fournir un étrier de frein à disque muni d'un piston présentant une bonne résistance aux vibrations et chocs transmis par la plaquette.

Les systèmes de freinage de véhicules automobiles actuels sont généralement munis de freins à disque ou de freins à tambour. La présente invention se rapporte aux freins à disque.

Un frein à disque comporte un étrier de frein à disque. L'étrier de frein à disque est solidaire d'un châssis du véhicule par l'intermédiaire d'une chape qui, elle, est fixée au châssis du véhicule par l'intermédiaire d'un porte fusée. Un corps de l'étrier comporte un alésage, ou cylindre hydraulique, dans lequel un piston de frein est monté coulissant. Un espace est ménagé entre le piston et un nez de l'étrier. Dans cet espace sont montées deux plaquettes, respectivement interne et externe. La plaquette externe est située coté nez de l'étrier, tandis que la plaquette interne est située coté piston de frein. Un disque de frein à disque est également logé dans cet espace. Le disque est encadré par les plaquettes. Le disque est monté en rotation sur une roue du véhicule, de manière à tourner en même temps que la roue du véhicule. Les plaquettes sont montées sur un support de plaquette par l'intermédiaire de ressorts.

Une chambre hydraulique, remplie de liquide hydraulique, et à volume variable, est située entre un fond du cylindre hydraulique et le piston. Lors d'un freinage, du liquide hydraulique arrive sous pression dans la chambre hydraulique. Une augmentation du volume hydraulique entraîne une augmentation d'une pression hydraulique dans la chambre. La pression hydraulique agit sur le piston à l'endroit de son extrémité arrière, permettant de pousser le piston en direction des plaquettes.

Le piston vient alors au contact de la plaquette interne. La plaquette interne est ainsi déplacée puis accolée sur le disque. Dans le cas d'un étrier flottant, l'action du disque sur la plaquette interne entraîne un déplacement de l'étrier qui amène la plaquette externe en contact du disque. Les deux plaquettes étant montées fixes en rotation, la force de frottement s'exerçant sur le disque en rotation vient s'opposer à la rotation du disque et donc de la roue.

Le piston, monté coulissant dans le cylindre hydraulique, est soumis à des nombreuses contraintes mécaniques, telles que des vibrations ou des chocs transmis notamment par la plaquette interne.

Par ailleurs, lors d'un freinage, les plaquettes sont à l'origine de bruits pouvant gêner un utilisateur du véhicule. En effet, la plaquette lorsqu'elle est accolée au disque est soumise à un déplacement tangentiel suivant le sens de rotation de la roue. Ce déplacement tangentiel est une des origines des bruits engendrés par la plaquette lors d'un freinage. En effet, la plaquette cogne contre son support de plaquettes, et racle contre la face du disque à laquelle elle est accolée.

Actuellement, pour diminuer les bruits de frottement des plaquettes, il est connu de disposer, sur une face du corps de la plaquette en contact avec l'étrier ou un élément de l'étrier, un dispositif filtrant la transmission des bruits entre le corps de la plaquette et l'étrier. Ce dispositif est constitué d'une plaque métallique. Plus précisément, la plaquette interne est munie d'une plaque métallique au moins sur une face en contact avec le piston. En effet, on a remarqué que lors d'un freinage, la plaquette interne, en contact avec le piston, génère plus de bruit que la plaquette externe. Aussi, il est possible de ne munir que la plaquette interne d'un tel dispositif filtrant la transmission des bruits.

Une telle solution comporte cependant des inconvénients. En effet, une plaquette étant de forme symétrique, elle peut être montée de manière aléatoire sur la chape. C'est à dire qu'il n'existe pas de moyen d'indexation permettant d'assurer une bonne orientation d'une plaquette par rapport au disque et au piston ou au nez de l'étrier. Aussi, afin d'optimiser un temps de montage des plaquettes de frein sur l'étrier, il est connu de monter sur les deux faces des plaquettes la plaque permettant d'atténuer les bruits. Ainsi, quel que soit le sens de montage d'une plaquette, la face dirigée vers le piston ou le nez de l'étrier est toujours munie de la plaque atténuant les bruits. Si une telle solution permet d'optimiser un temps de montage du frein à disque, elle en augmente toutefois le coût de fabrication.

Il est également connu, par le document FR 2823546, de munir le piston d'une capuche. Une telle capuche permet de diminuer des mouvements relatifs du piston et de la plaquette interne lors du freinage, et donc d'atténuer les bruits.

Une telle solution permet de diminuer partiellement les bruits. Cependant, les bruits ne sont pas tous atténués. La gêne pour le conducteur, bien que moindre, existe toujours.

Par ailleurs, des chocs et vibrations de la plaquette sont transmis au piston. Le document US 5704452 révèle le préambule de la revendication 1.

Dans l'invention, on cherche à diminuer un bruit de frottement d'une plaquette de frein lors d'un freinage de manière simple et peu coûteuse. On cherche également à protéger le piston des vibrations et chocs auxquels la plaquette interne est soumise lors d'un freinage.

Pour arriver à ce résultat, l'invention propose de munir un piston de frein à disque d'une protection formée par une double capuche. Les pistons de freins à disque principalement concernés par l'invention sont munis d'une cavité interne ouverte à une extrémité axiale avant et fermée à une extrémité axiale arrière. Une ouverture de la cavité est dirigée vers une plaquette interne du frein à disque. La protection selon l'invention est apte à obstruer l'ouverture de la cavité. La protection s'étend perpendiculairement à l'axe du piston. La protection est munie de moyens d'accrochage au piston, afin de solidariser ladite protection au piston.

La protection selon l'invention comporte deux pièces d'appui solidaires l'une de l'autre, mais pouvant se déplacer latéralement l'une par rapport à l'autre. Par exemple, une pièce d'appui interne, dirigée vers la cavité, est solidaire du piston par l'intermédiaire de premiers moyens d'accrochage. Une pièce d'appui externe, c'est-à-dire dirigée vers la plaquette interne, est solidaire du piston par l'intermédiaire de seconds moyens d'accrochage. Ces seconds moyens d'accrochage sont tels que la pièce d'appui externe peut se déplacer latéralement par rapport à la pièce d'appui interne, qui elle est fixe sur le piston.

Ainsi, lors d'un freinage, lorsque la plaquette interne est soumise à un déplacement radial la faisant cogner contre un support de plaquettes du frein à disque, le piston n'est pas entraîné, c'est-à-dire qu'il ne subit pas les vibrations et chocs auxquels la plaquette est soumise. En effet, les chocs et vibrations sont transmis à la pièce d'appui externe, en contact avec la plaquette, mais pas à la pièce d'appui interne et au piston. Une telle protection favorise le découplage de la plaquette interne par rapport au piston et donc par rapport à l'étrier. Un tel découplage favorise le positionnement de la plaquette sur la chape. On élimine ainsi un état d'équilibre instable de la plaquette, ladite plaquette étant calée dans ses appuis sur la chape. Les chocs sont ainsi amortis et les bruits atténués, puisque le découplage élimine la transmission des vibrations vers le piston et l'étrier.

Dans un exemple particulier de réalisation de l'invention, et afin d'augmenter les amortissements des bruits, il est possible d'utiliser une pièce d'appui interne possédant plusieurs couches successives, dont une au moins permet d'augmenter le découplage du piston et de la plaquette. Par exemple, une partie centrale de la pièce d'appui interne peut être réalisée en tôle d'acier inoxydable ou en tôle d'acier galvanisé ou en résine synthétique. La partie centrale est recouverte, au moins sur sa face en contact avec la pièce d'appui externe, d'une matière moins dure telle que du caoutchouc ou un élastomère. Il est possible que la partie centrale de la pièce d'appui interne soit munie sur ses deux faces, c'est-à-dire sur sa face en contact avec la pièce d'appui externe et sur sa face en contact avec la cavité, d'une couche en caoutchouc. Les différentes couches peuvent être solidarisées entre elles et à la partie centrale par exemple par collage. La pièce d'appui externe peut, elle, être réalisée en métal seulement, notamment en tôle d'acier inoxydable ou en tôle d'acier galvanisé.

Dans un exemple particulier de réalisation de l'invention, le piston est de forme cylindrique circulaire et les pièces d'appui formant la protection sont des disques. Un diamètre du disque formant chacune des pièces d'appui est supérieur à un diamètre de l'ouverture de la cavité, de manière à ce que le disque puisse être maintenu sur le piston malgré la présence de la cavité.

Les moyens d'accrochage de la pièce d'appui interne sur le piston sont par exemple formés d'au moins deux languettes s'étendant sensiblement perpendiculaires à un plan de la pièce d'appui interne. Les languettes sont telles qu'elles peuvent coopérer avec la paroi interne de la cavité, notamment en s'encliquetant dans la cavité.

Les moyens d'accrochage de la pièce d'appui externe sur le piston sont par exemple formés de languettes réalisées à partir de la plaque formant la pièce d'appui externe et recourbées par rapport au plan de la plaque externe, lesdites languettes étant aptes à être engagées dans des orifices ménagés sur la pièce d'appui interne. C'est-à-dire que la pièce d'appui interne est munie d'orifices dont des dimensions sont suffisantes pour pouvoir laisser passer les languettes de la pièce d'appui externe. Par ailleurs, afin de permettre un découplage aboutissant à une diminution des bruits, les orifices ménagés sur la pièce d'appui interne sont tels que la pièce d'appui externe peut se déplacer latéralement par rapport à la pièce d'appui interne. C'est-à-dire par exemple que les orifices de la pièce d'appui interne ont des dimensions supérieures aux dimensions des languettes de la pièce d'appui externe.

Les orifices sont ménagés sur une rive de la première pièce d'appui de manière à coïncider avec les pattes recourbées de la deuxième pièce d'appui lorsqu'on superpose les deux pièces d'appui. Ainsi, un contour de la deuxième pièce d'appui suit sensiblement un contour de la première pièce d'appui. C'est à dire qu'une surface d'appui et de frottement de la deuxième pièce d'appui sur la plaquette, et donc du piston sur la plaquette, est peu pénalisée par la présence des moyens d'accrochage de la deuxième pièce d'appui sur le piston.

Il est possible de munir le frein à disque d'une protection similaire fixée à un nez de l'étrier. C'est-à-dire qu'une première pièce d'appui, ou pièce d'appui interne, est solidaire du nez de l'étrier. Une seconde pièce d'appui, ou pièce d'appui externe, est montée sur la pièce d'appui interne. La pièce d'appui externe peut se déplacer latéralement par rapport à la pièce d'appui interne afin d'atténuer un bruit.

L'invention a donc pour objet un dispositif d'atténuation du bruit dans un frein à disque, ledit dispositif étant apte à découpler un piston du frein à disque d'une plaquette dudit frein, ladite plaquette étant destinée à être appliquée par le piston contre un disque du frein à disque, le dispositif d'atténuation du bruit étant solidaire du piston à l'endroit d'une extrémité ouverte d'une cavité interne du piston et obstruant l'ouverture de la cavité, ledit dispositif venant au contact de la plaquette de rein,
caractérisé en ce qu'il comporte au moins deux pièces d'appui solidaires l'une de l'autre, mais pouvant se déplacer latéralement l'une par rapport à l'autre pendant un freinage.

Dans des exemples de réalisation particuliers de l'invention, le dispositif d'atténuation du bruit peut comporter tout ou parties des caractéristiques suivantes:
- une première pièce d'appui est formée d'une première plaque et de moyens de maintien de la première plaque sur le piston, et une deuxième pièce d'appui est formée d'une deuxième plaque et de moyens de maintien de la deuxième pièce d'appui sur le piston.
- la première et la deuxième plaques sont des disques
- les moyens de maintien de la deuxième pièce d'appui sur le piston sont munis d'au moins deux pattes, les pattes s'étendant sensiblement perpendiculaires à un plan de la deuxième plaque, les pattes étant aptes à être logées dans des lumières ménagées sur la première plaque, les pattes étant aptes à être logées dans la cavité du piston de manière à coopérer avec une paroi interne de la cavité.
- la première plaque est munie de trois lumières réparties régulièrement sur un périmètre interne de ladite première plaque, et en ce que la deuxième plaque est munie de trois pattes disposées régulièrement sur un périmètre externe de ladite deuxième plaque, de manière à ce que chaque patte de la deuxième plaque soit logée dans une lumière de la première plaque, les lumières ménagées sur la première plaque ayant des dimensions supérieures à des dimensions des pattes de la deuxième plaques, la deuxième plaque pouvant se déplacer latéralement par rapport à la première plaque.
- les moyens de maintien de la première plaque sur le piston sont munis d'au moins deux pattes sur la première plaque, les pattes s'étendant sensiblement perpendiculaires à un plan de la première plaque, les pattes étant aptes à être logées dans la cavité du piston de manière à coopérer avec la paroi interne de la cavité.
- les moyens de maintien de la première plaque sur le piston sont munis de trois pattes réparties régulièrement sur un périmètre externe de ladite première plaque.
- la première pièce d'appui est multicouche, et comporte une plaque métallique recouverte au moins sur une face dirigée vers la deuxième pièce d'appui d'une couche en matériau apte à découpler le piston de la plaquette, et la deuxième pièce d'appui est une plaque métallique.
- la plaque métallique de la première pièce d'appui est recouverte, au moins sur la face dirigée vers la deuxième pièce d'appui, d'une couche de caoutchouc.

L'invention a également pour objet un frein à disque muni d'un dispositif d'atténuation du bruit de l'invention.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Une représentation schématique en coupe d'un étrier de frein à disque muni d'un dispositif d'atténuation du bruit de l'invention ;
- Figure 2 : Une représentation schématique en coupe d'un piston de frein à disque selon un exemple de réalisation de l'invention ;
- Figure 3 : Une représentation d'une pièce d'un dispositif d'atténuation du bruit selon un exemple de réalisation de l'invention ;
- Figure 4 : Une représentation schématique d'un dispositif d'atténuation du bruit selon un exemple de réalisation de l'invention.

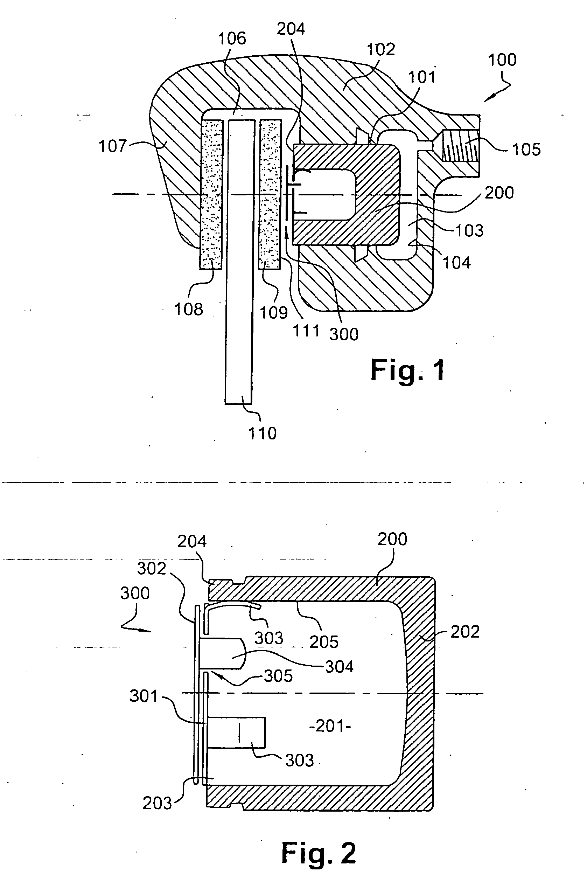

Sur la figure 1 est représenté un étrier 100 de frein à disque. Un alésage 101 cylindrique est ménagé dans un corps 102 de l'étrier 100. Un piston 200 cylindrique est monté coulissant dans l'alésage 101. Une chambre hydraulique 103, à volume variable, est située entre un fond 104 de l'alésage 101 et le piston 200. La chambre hydraulique 103 est alimentée en liquide de frein par un circuit d'alimentation 105.

Un espace 106 est ménagé entre le piston 200 et un nez 107 de l'étirer 100. Une plaquette externe 108 et une plaquette interne 109 sont montées dans cette espace 106. Un disque 110 est monté en rotation sur une roue (non représentée) et est intercalé entre la plaquette externe 108 et la plaquette interne 109. Les plaquettes 108 et 109 sont montées fixes en rotation.

Une extrémité du piston 22, dirigée vers la plaquette interne (109) est munie d'un dispositif d'atténuation du bruit 300 formant une capuche.

Sur la figure 2, on peut voir plus en détail le piston 200 et le dispositif d'atténuation du bruit 300. Le piston 200 est muni d'une cavité interne 201. La cavité interne est fermée à une extrémité axiale fermée 202 et est ouverte à une extrémité axiale ouverte 203. Une ouverture de la cavité 201 est circulaire.

L'extrémité fermée 202 du piston 200 est dirigée vers la chambre hydraulique 103 (figure 1). Une pression hydraulique exercée sur l'extrémité fermée 202 du piston 200 permet un déplacement du piston 200 dans l'alésage 101, en direction des plaquettes 108 et 109. Une paroi 204 bordant l'extrémité ouverte 203 du piston 200 vient alors en contact d'une face interne 111 de la plaquette interne 109. Par face interne 111 de la plaquette 109, on entend face dirigée vers le piston 200.

Le piston est muni du dispositif d'atténuation du bruit 300 qui obstrue l'ouverture de la cavité 201. C'est-à-dire que le dispositif d'atténuation du bruit 300 est solidaire du piston 200 à l'endroit de son extrémité ouverte 203.

Le dispositif d'atténuation du bruit 300 comporte une première pièce d'appui 301 et une deuxième pièce d'appui 302. La première pièce d'appui 301 est directement solidaire du piston 200 grâce à des moyens de maintien de la première pièce d'appui 302 sur le piston 200. La deuxième pièce d'appui 302 est solidaire du piston et de la première pièce d'appui 301 grâce à des moyens de maintien de la deuxième pièce d'appui 302 sur le piston 200.

Dans l'exemple représenté à la figure 2, les moyens de maintien de la première pièce d'appui 301 sur le piston 200 comportent des pattes 303. Les pattes 303 sont montées dans la cavité 201 par déformation élastique. C'est-à-dire que les pattes 303 coopèrent avec une paroi interne 205 de la cavité 201.

Dans l'exemple représenté à la figure 2, les moyens de maintien de la deuxième pièce d'appui 302 sur le piston 200 comportent des pattes 304 aptes à être logées dans des lumières 305 ménagées sur la première pièce d'appui 301.

Lors d'un freinage, la deuxième pièce d'appui 302 vient au contact de la face interne 111 de la plaquette interne 109. Une surface d'appui et de contact entre le piston 200 et la plaque interne 109 est augmentée. En effet, la surface d'appui et de contact est désormais formée par toute la surface de la deuxième pièce d'appui 302, alors que sans le dispositif d'atténuation du bruit 300, la surface de contact et d'appui est circonférentielle, c'est à dire limitée à la paroi 204 bordant l'extrémité ouverte 203 de la cavité 201.

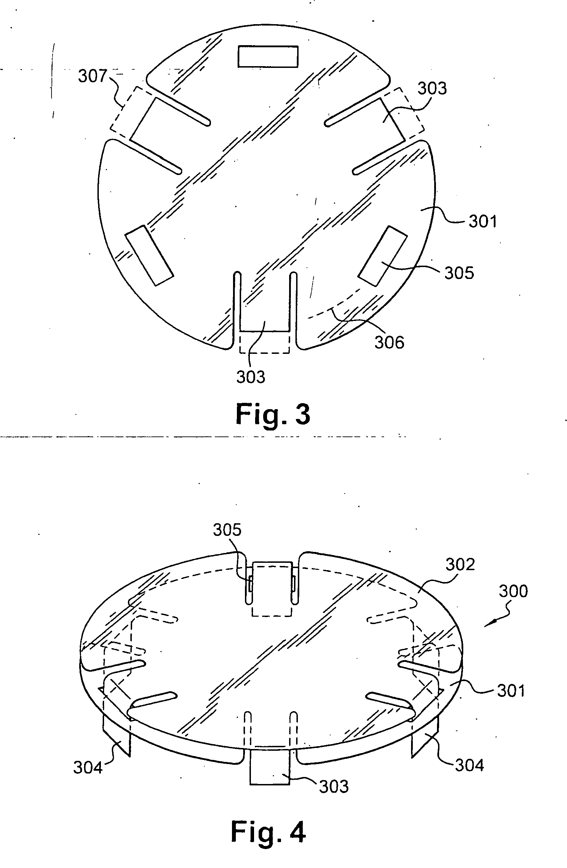

Sur les figures 3 et 4 est représenté un exemple particulier de réalisation du dispositif d'atténuation du bruit 300 de l'invention. Dans cet exemple, les pièces d'appui interne 301, ou première pièce d'appui, et externe 302, ou deuxième pièce d'appui, sont respectivement formées par une plaque interne 301 et une plaque externe 302 circulaires.

Sur la figure 4, on peut voir les pattes 303 du disque interne 301 aptes à se monter dans la cavité 201. Les pattes 304 du disque externe 302 sont logées dans des lumières 305 du disque interne 301. Les pattes 303 et 304 s'étendent sensiblement perpendiculaires à un plan des disques 301 et 302. Les disques 301 et 302 sont superposés pour former une double capuche. Aussi, les pattes s'étendent parallèlement les unes aux autres. Par exemple les pattes sont formées en recourbant des languettes, appartenant audits disques 301 ou 302, par rapport au plan des disques. Une courbure des pattes 303 par rapport au disque interne 301 doit être suffisante pour permettre aux pattes 303 de coopérer avec la paroi interne de la cavité 201. De même, une courbure des pattes 304 par rapport au disque externe 302 doit être suffisante pour permettre aux pattes 304 de coopérer avec la paroi interne de la cavité 201. Par ailleurs, les pattes 303 et les pattes 304 doivent être décalées les unes par rapport aux autres, lorsque les disques 301 et 302 sont superposés, de manière à ce que toutes les pattes 303 et 304 puissent être montées dans la cavité 201 sans chevauchement.

Sur la figure 3 est représenté le disque interne 301 du dispositif d'atténuation du bruit 300. On remarque que les lumières 305 sont réparties régulièrement sur un périmètre interne 306 du disque 301. De même, les pattes 303 sont réparties régulièrement sur un périmètre externe 307 du disque 301. Une patte 303 est disposée entre deux lumières 305. Ainsi, on garantit le non chevauchement des pattes 303 et 304 dans la cavité, puisque les pattes 304 passent dans les lumières 305 avant de déboucher dans la cavité 201.

Des dimensions des lumières 305 sont strictement supérieures à des dimensions des pattes 304 du disque externe 302. Ainsi, comme cela est représenté sur la figure 4, les pattes 304 du disque externe 302 peuvent être logées dans les lumières 305 du disque interne 301. Et le disque externe 302 peut se déplacer latéralement par rapport au disque interne 301 dans la mesure où il existe un jeu des pattes 304 dans les lumières 305.

Les lumières 305 permettent également un passage d'air, notamment lorsque l'air contenu dans la cavité 201 est échauffé par suite du fonctionnement du frein à disque. L'évacuation de cet air échauffé à travers les lumières 305 vers l'atmosphère permet d'éviter une surpression dans la cavité 201. L'air passe depuis l'intérieur de la cavité 201 vers l'extérieur par les lumières 305, et par un espace entre la plaque externe 302 et la plaque interne 301. En effet, du fait du jeu entre les pattes 304 et les lumières 305, un espace peut être créé au moins temporairement entre ces deux plaques.

Dans cet exemple de réalisation, le disque interne 301 et le disque externe 302 sont chacun munis de trois pattes 303 et 304 réparties régulièrement sur un périmètre externe de ces deux disques. Le périmètre externe du disque externe 302 autour duquel s'étendent les pattes 304 est inférieur au périmètre externe 307 du disque interne 301, de manière à ce que les pattes 304 du disque externe 302 puissent coïncider avec les lumières 305 du disque interne 301 réparties sur le périmètre interne 306 dudit disque 301.

Il est possible de réaliser des protections 300 de différentes dimensions, selon des besoins des utilisateurs. C'est à dire que les protections 300 peuvent être fabriquées spécifiquement pour des pistons de dimensions différentes.

Dans un exemple de réalisation préféré de l'invention, le disque interne 301 est constitué d'une tôle recouverte de part et d'autre de caoutchouc. Le disque externe 302 est lui formé par une tôle en acier inoxydable.

## Revendications

1. Dispositif (300) d'atténuation du bruit dans un frein à disque (100), ledit dispositif étant apte à découpler un piston (200) du frein à disque d'une plaquette (109) dudit frein, ladite plaquette étant destinée à être appliquée par le piston contre un disque (110) du frein à disque, le dispositif d'atténuation du bruit étant solidaire du piston à l'endroit d'une extrémité ouverte d'une cavité interne (201) du piston et obstruant l'ouverture de la cavité, ledit dispositif venant au contact de la plaquette de frein,
**caractérisé en ce qu'**il comporte au moins deux pièces d'appui (301, 302) solidaires l'une de l'autre, mais pouvant se déplacer latéralement l'une par rapport à l'autre pendant un freinage.

2. Dispositif selon la revendication 1, **caractérisé en ce que**
- une première pièce d'appui est formée d'une première plaque (301) et de moyens de maintien (303) de la première plaque sur le piston,
- une deuxième pièce d'appui est formée d'une deuxième plaque (302) et de moyens de maintien (304) de la deuxième pièce d'appui sur le piston.

3. Dispositif selon la revendication 2, **caractérisé en ce que** la première et la deuxième plaques sont des disques.

4. Dispositif selon l'une des revendications 2 à 3, **caractérisé en ce que** les moyens de maintien de la deuxième pièce d'appui sur le piston sont munis d'au moins deux pattes (304), les pattes s'étendant sensiblement perpendiculaires à un plan de la deuxième plaque, les pattes étant aptes à être logées dans des lumières (305) ménagées sur la première plaque, les pattes étant aptes à être logées dans la cavité du piston de manière à coopérer avec une paroi interne (205) de la cavité.

5. Dispositif selon la revendication 4, **caractérisé en ce que** la première plaque est munie de trois lumières réparties régulièrement sur un périmètre interne de ladite première plaque, et **en ce que** la deuxième plaque est munie de trois pattes disposées régulièrement sur un périmètre externe de ladite deuxième plaque, de manière à ce que chaque patte de la deuxième plaque soit logée dans une lumière de la première plaque, les lumières ménagées sur la première plaque ayant des dimensions supérieures à des dimensions des pattes de la deuxième plaques, la deuxième plaque pouvant se déplacer latéralement par rapport à la première plaque.

6. Dispositif selon l'une des revendications 3 à 5, **caractérisé en ce que** les moyens de maintien de la première plaque sur le piston sont munis d'au moins deux pattes (303) sur la première plaque, les pattes s'étendant sensiblement perpendiculaires à un plan de la première plaque, les pattes étant aptes à être logées dans la cavité du piston de manière à coopérer avec la paroi interne de la cavité.

7. Dispositif selon l'une des revendications 2 à 6, **caractérisé en ce que** les moyens de maintien de la première plaque sur le piston sont munis de trois pattes réparties régulièrement sur un périmètre externe (307) de ladite première plaque.

8. Dispositif selon l'une des revendications 1 à 9, **caractérisé en ce que**
- la première pièce d'appui est multicouche, et comporte une plaque métallique recouverte au moins sur une face dirigée vers la deuxième pièce d'appui d'une couche en matériau apte à découpler le piston de la plaquette,
- la deuxième pièce d'appui est une plaque métallique.

9. Dispositif selon la revendication 8, **caractérisé en ce que** la plaque métallique de la première pièce d'appui est recouverte, au moins sur la face dirigée vers la deuxième pièce d'appui, d'une couche de caoutchouc.

10. Frein à disque (100) muni d'un dispositif (300) d'atténuation du bruit selon l'une des revendications 1 à 9.

## Claims

1. Device (300) for attenuation of the noise in a disc brake (100), the said device being designed to uncouple a piston (200) of the disc brake from a pad (109) of the said brake, the said pad being intended to be pressed by the piston against a disc (110) of the disc brake, the noise attenuation device being connected to the piston at an open end of an internal cavity (201) of the piston and blocking the opening of the cavity, the said device coming into contact with the brake pad, **characterized in that** it includes at least two bearing parts (301, 302) connected to each other, but being able to move laterally in relation to each other during braking.

2. Device according to Claim 1, **characterized in that**:
- a first bearing part consists of a first plate (301) and means of holding (303) the first plate on the piston;
- a second bearing part consists of a second plate (302) and means of holding (304) the second bearing part on the piston.

3. Device according to Claim 2, **characterized in that** the first and the second plates are discs.

4. Device according to one of Claims 2 to 3, **characterized in that** the means of holding the second bearing part on the piston are provided with at least two tabs (304), the tabs extending generally perpendicular to a plane of the second plate, the tabs being designed to fit in slots (305) made in the first plate, the tabs being designed to fit in the cavity of the piston so as to cooperate with an internal wall (205) of the cavity.

5. Device according to Claim 4, **characterized in that** the first plate is provided with three slots evenly distributed on an internal perimeter of the said first plate, and **in that** the second plate is provided with three tabs evenly disposed on an external perimeter of the said second plate, so that each tab of the second plate fits in a slot of the first plate, the slots made in the first plate having dimensions larger than the dimensions of the tabs of the second plate, the second plate being able to move laterally in relation to the first plate.

6. Device according to one of Claims 3 to 5, **characterized in that** the means of holding the first plate on the piston are provided with at least two tabs (303) on the first plate, the tabs extending generally perpendicular to a plane of the first plate, the tabs being designed to fit in the cavity of the piston so as to cooperate with the internal wall of the cavity.

7. Device according to one of Claims 2 to 6, **characterized in that** the means of holding the first plate on the piston are provided with three tabs evenly distributed on an external perimeter (307) of the said first plate.

8. Device according to one of Claims 1 to 9,
**characterized in that**:
- the first bearing part is multilayer, and includes a metal plate coated, at least on a face oriented towards the second bearing part, with a layer made of material designed to uncouple the piston from the pad;
- the second bearing part is a metal plate.

9. Device according to Claim 8, **characterized in that** the metal plate of the first bearing part is coated, at least on the face oriented towards the second bearing part, with a layer of rubber.

10. Disc brake (100) provided with a noise attenuation device (300) according to one of Claims 1 to 9.

## Patentansprüche

1. Vorrichtung (300) zur Geräuschdämpfung in einer Scheibenbremse (100), wobei die Vorrichtung dazu geeignet ist, einen Kolben (200) der Scheibenbremse von einem Bremsklotz (109) der Bremse zu entkoppeln, wobei der Bremsklotz dazu bestimmt ist, vom Kolben gegen eine Scheibe (110) der Scheibenbremse angelegt zu werden, wobei die Geräuschdämpfungsvorrichtung mit dem Kolben an der Stelle eines offenen Endes eines Innenhohlraums (201) des Kolbens fest verbunden ist und die Öffnung des Hohlraums versperrt, wobei die Vorrichtung mit dem Bremsklotz in Kontakt gelangt,
**dadurch gekennzeichnet, dass** sie mindestens zwei Auflageteile (301, 302) aufweist, die miteinander fest verbunden sind, sich aber seitlich zueinander während des Bremsen verlagern können.

2. Vorrichtung nach Anspruch 1, **dadurch gekennzeichnet, dass**
- ein erste Auflageteil aus einer ersten Platte (301) und Mitteln (303) zum Halten der erste Platte an dem Kolben gebildet ist,
- ein zweites Auflageteil aus einer zweiten Platte (302) und Mitteln (304) zum Halten des zweiten Auflageteils an dem Kolben gebildet ist.

3. Vorrichtung nach Anspruch 2, **dadurch gekennzeichnet, dass** die erste und zweite Platte Scheiben sind.

4. Vorrichtung nach einem der Ansprüche 2 bis 3, **dadurch gekennzeichnet, dass** die Mittel zum Halten des zweiten Auflageteils an dem Kolben mit mindestens zwei Laschen (304) versehen sind, wobei die Laschen sich im Wesentlichen senkrecht zu einer Ebene der zweiten Platte erstrecken, wobei die Laschen dazu geeignet sind, in an der ersten Platte ausgebildeten Öffnungen (305) aufgenommen zu sein, wobei die Laschen dazu geeignet sind, im Hohlraum des Kolbens so aufgenommen zu sein, dass sie mit einer Innenwand (205) des Hohlraums zusammenwirken.

5. Vorrichtung nach Anspruch 4, **dadurch gekennzeichnet, dass** die erste Platte mit drei Öffnungen versehen ist, die an einem inneren Umfang der ersten Platte gleichmäßig verteilt sind, und dass die zweite Platte mit drei Laschen versehen ist, die an einem äußeren Umfang der zweiten Platte gleichmäßig angeordnet sind, so dass jede Lasche der zweiten Platte in einer Öffnung der ersten Platte aufgenommen ist, wobei die Abmessungen der an der ersten Platte ausgebildeten Öffnungen größer sind als die Abmessungen der Laschen der zweiten Platte, wobei die zweite Platte sich seitlich bezüglich der ersten Platte verlagern kann.

6. Vorrichtung nach einem der Ansprüche 3 bis 5, **dadurch gekennzeichnet, dass** die Mittel zum Halten der erste Platte an dem Kolben mit mindestens zwei Laschen (303) an der ersten Platte versehen sind, wobei die Laschen sich im Wesentlichen senkrecht zu einer Ebene der ersten Platte erstrecken, wobei die Laschen dazu geeignet sind, im Hohlraum des Kolbens so aufgenommen zu sein, dass sie mit der Innenwand des Hohlraums zusammenwirken.

7. Vorrichtung nach einem der Ansprüche 2 bis 6, **dadurch gekennzeichnet, dass** die Mittel zum Halten der ersten Platte an dem Kolben mit drei Laschen versehen sind, die an einem äußeren Umfang (307) der ersten Platte gleichmäßig verteilt sind.

8. Vorrichtung nach einem der Ansprüche 1 bis 9, **dadurch gekennzeichnet, dass**
- der erste Auflageteil mehrlagig ist und eine Metallplatte aufweist, die mindestens auf einer zum zweiten Auflageteil gerichteten Seite mit einer Schicht aus einem Material beschichtet ist, das geeignet ist, den Kolben vom Bremsklotz zu entkoppeln,
- der zweite Auflageteil eine Metallplatte ist.

9. Vorrichtung nach Anspruch 8, **dadurch gekennzeichnet, dass** die Metallplatte des ersten Auflageteils mindestens auf der zum zweiten Auflageteil gerichteten Seite mit einer Schicht aus Gummi beschichtet ist.

10. Scheibenbremse (100), die mit einer Vorrichtung (300) zur Geräuschdämpfung nach einem der Ansprüche 1 bis 9 ausgestattet ist.
